# EUROPÄISCHE PATENTSCHRIFT

(11) **EP 1 082 893 B1**
(45) Veröffentlichungstag und Bekanntmachung des Hinweises auf die Patenterteilung: **06.04.2005**
(21) Anmeldenummer: 00119727.6
(22) Anmeldetag: 09.09.2000
(51) Int. Cl.: A01D 34/76, A01D 34/64, F16H 7/12

(54) **Mähwerk und Fahrzeug bzw. Gerät**
Mower and vehicle or apparatus
Faucheuse et véhicule ou appareil

(30) Priorität: 10.09.1999 US 393526
(43) Veröffentlichungstag der Anmeldung: 14.03.2001
(73) Patentinhaber: DEERE & COMPANY, Moline, Illinois 61265-8098 (US)
(72) Erfinder: Thorman, Christopher Scott, Beaver Dam, WI 53916 (US); Holland, Ronald Paul, Fox Lake, WI 53933 (US); Kuhn, John Boyd, Rubicon, WI 53078 (US)
(74) Vertreter: Magin, Ludwig Bernhard

(56) Entgegenhaltungen:
- EP-A- 0 445 623
- EP-A- 0 623 766
- DE-A- 4 427 508
- GB-A- 1 366 072
- US-A- 3 766 722
- US-A- 4 934 989

## Beschreibung

Die Erfindung betrifft ein Mähwerk mit einem Zugmittelgetriebe mit wenigstens zwei Antriebsscheiben, die von einem Zugmittel umschlungen werden und einer Spanneinrichtung, die über wenigstens zwei drehbar auf einer gemeinsamen durch ein Spannmittel belasteten, schwenkbar an dem Mähwerk vorgesehenen Halterung angebrachte Spannrollen auf das Zugmittel einwirken kann, wobei das Zugmittel auf entgegengesetzten Seiten des Zugmittels angreift, sowie ein Fahrzeug bzw. Gerät zur Rasen-, Garten- bzw. Grundstückspflege.

Fahrzeuge, wie Rasen- und Gartentraktoren sind oftmals daran angepaßt, Anbaugeräte wie Mähwerke aufzunehmen und zu betreiben, und es ist üblicherweise ein Riementrieb vorgesehen, der eine Riemenscheibe aufweist, welche mit einer Kurbelwelle eines Fahrzeugantriebs verbunden ist. Ein Keilriemen ist sowohl um eine Riemenscheibe auf der Kurbelwelle wie auch um eine Riemenscheibe geschlungen, welche wirksam mit Spindeln des Mähwerks verbunden ist. Oftmals ist der Keilriemen, der um die Kurbelwellenriemenscheibe geschlungen ist, Teil einer ersten Antriebseinheit, welche mit einer zweiten Antriebseinheit über eine Doppel-Riemenscheiben-Übersetzungsanordnung in Verbindung steht, welche beispielsweise eine Spindel des Mähwerks als Übersetzungswelle zur Verbindung zweier Riemenscheiben der Übersetzungsanordnung sein kann.

Erste Zugmittelgetriebe an Mähwerken benötigen Spanneinrichtungen, um eine passende Spannung in dem Zugmittel aufrechtzuerhalten, um eine normale Dehnung und einen Verschleiß des Zugmittels ausgleichen zu können und um Belastungen, die auf das Mähwerk einwirken oder durch Arbeitseinheiten wie Mähmesser auftreten, aufnehmen zu können. Viele übliche Mähwerke verwenden zwei Spannscheiben, die an gegenüberliegenden Seiten des Zugmittels angreifen. Eine Feder greift an der an der Rückseite des Zugmittels anliegenden Spannscheibe an, um so weit als möglich eine gleichmäßige Spannung aufrechtzuerhalten. Die US-A-6,000,202 zeigt ein solches Mähwerk, wobei die Spannscheiben auf einer gemeinsamen federbelasteten und um einen Mittenbereich schwenkbare Halterung angeordnet sind, so daß die Spannscheiben in entgegengesetzte Richtungen belastet bzw. bewegt werden. Auch die US-A-3,766,722 zeigt ein derartiges Mähwerk, wobei die Spannscheiben aber in der gleichen Richtung bewegbar vorgesehen sind.

Die gattungsgemäße US-A-4,016,709 zeigt ein Sicherungssystem für einen Rasenmäher mit einer Spanneinrichtung, welche zwei Spannscheiben aufweist, die auf entgegengesetzten Seiten eines Zugmittels angreifen.

Das der Erfindung zugrunde liegende Problem wird in dem großen Platzbedarf bekannter Spanneinrichtungen für Zugmittelgetriebe an Mähwerken gesehen.

Dieses Problem wird erfindungsgemäß durch die Lehre der Patentansprüche 1 und 6 gelöst, wobei in den weiteren Patentansprüchen die Lösung in vorteilhafter Weise weiterentwickelnde Merkmale aufgeführt sind.

Ein erfindungsgemäßes Mähwerk weist ein Zugmittelgetriebe mit wenigstens zwei Antriebsscheiben, die von einem Zugmittel umschlungen werden und einer Spanneinrichtung auf, die über wenigstens zwei drehbar auf einer gemeinsamen durch ein Spannmittel belasteten, schwenkbar an dem Mähwerk vorgesehenen Halterung angebrachte Spannrollen auf das Zugmittel einwirken kann, wobei die Spannrollen an entgegengesetzten Seiten des Zugmittels angreifen. Das Zugmittel umschlingt von der ersten, auf einer ersten Seite des Zugmittels angreifenden Spannscheibe kommend, wenigstens eine der Antriebsscheiben, um im Anschluss auf die zweite, an einer der ersten Seite des Zugmittels gegenüberliegenden Seite des Zugmittels angreifende Spannscheibe zu treffen. Die Spannrollen greifen also auf gegenüberliegenden Seiten wenigstens einer der Antriebsscheiben an entgegengesetzten Seiten des Zugmittels an. Auf diese Weise wird ein Zugmittelgetriebe zur Verfügung gestellt, welches eine Spanneinrichtung aufweist, die zwei angebrachte Spannrollen aufweist, wobei die Spannrollen um eine gemeinsame Achse schwenken können und trotzdem beide, sowohl die auf einer Innenseite des Zugmittels als auch die auf einer Außenseite des Zugmittels angreifende Spannrolle rotieren können. Die Geometrie der Anordnung erlaubt es Kräften auf einer Seite des Zugmittels einem Zugmitteldurchhang auf der anderen Seite des Zugmittels entgegenzuwirken. Daher genügen geringe Schwenkbewegungen der Halterung, auf der die Spannrollen angeordnet sind, um eine gewünschte bzw. notwendige Spannung des Zugmittels zu erzeugen bzw. aufrechtzuerhalten. Bei einem Zugmittel kann es sich im Geist der vorliegenden Erfindung um eine Kette oder ein anderes endloses Element zur Übertragung von Zugkräften handeln. Vorzugsweise ist das Zugmittel aber in der Art eines Riemens beispielsweise in der Art eines Keilriemens oder auch eines Zahnriemens ausgebildet. Auch die Verwendung mehrerer Zugmittel ist denkbar. Ist die Halterung um eine bezogen auf die Achse wenigstens einer der Antriebsscheiben schräge Achse angeordnet, so können auf diese Weise Höhenunterschiede zwischen den Antriebsscheiben ausgeglichen werden, wodurch der Gefahr eines Abspringens des Zugmittels sowie einem vorzeitigen Verschleiß desselben entgegengewirkt werden kann.

Die Spanneinrichtung kann zur Erzeugung der Belastung der Halterung ein Spannmittel bzw. eine Feder aufweisen. Es kann sich hierbei um eine Schraubenfeder handeln, es ist aber auch die Verwendung anderer Federarten denkbar. Abgesehen von einer Feder, bei der es sich um ein gängiges, einfaches und daher preisgünstiges Bauteil handelt, können auch andere Federmittel beispielsweise in der Art von Pneumatikzylindern Verwendung finden.

Greift an der Halterung ein Spannungslösegriff an, mittels dessen der Wirkung des Spannmittels entgegengewirkt werden kann, so kann beispielsweise eine Bedienungsperson an diesem angreifen und das Zugmittel vollständig oder zumindest teilweise spannungslos machen. Dies kann insbesondere dann eingesetzt werden, wenn das Zugmittel beispielsweise zu Reparaturzwecken oder auch zu Wartungsarbeiten von dem Zugmittelgetriebe bzw. den Antriebsscheiben abgenommen oder im Anschluß wieder auf diese montiert werden soll.

Um Kraft von dem Spannungslösegriff an die Halterung zu übertragen, kann die Spanneinrichtung einen Spannbolzen aufweisen. Dieser Spannbolzen ist vorzugsweise zumindest im wesentlichen parallel zu einer Achse, vorzugsweise einer Längsachse, des Spannmittels angeordnet, so daß er insbesondere bei der Verwendung einer Feder diese gegen ein Einknicken o.ä. sichert. Ist das Spannmittel als eine Schraubenfeder ausgebildet oder weist es eine solche auf, so kann sich der Spannbolzen auch durch die Schraubenfeder hindurch erstrecken, wodurch nur ein geringer Bauraum benötigt wird und die Schraubenfeder in einfacher Weise in Position gehalten wird.

Ein solches Mähwerk eignet sich insbesondere zur Verwendung an einem Fahrzeug bzw. Gerät zur Rasen-, Garten- bzw. Grundstückspflege. Es kann sich beispielsweise um selbstfahrende Fahrzeuge oder Geräte und auch um handgeschobene oder auch handgeführte Geräte handeln.

An einem solchen Fahrzeug bzw. Gerät kann ein einzelnes Mähwerk angebracht sein, es kann aber auch mit mehreren Mähwerken beispielsweise in einem Front- oder Heckbereich des Fahrzeugs oder Geräts versehen sein. Ein erfindungsgemäßes Mähwerk eignet sich insbesondere auch für die Anbringung unterhalb eines Fahrzeugs bzw. Geräts, da es nur einen geringen Bauraum benötigt und aufwendigen Wartungsarbeiten entgegenwirkt.

In der Zeichnung ist ein nachfolgend näher beschriebenes Ausführungsbeispiel der Erfindung dargestellt. Es zeigt:
- Fig. 1: eine Seitenansicht eines Geräts zur Rasen-, Garten- und Grundstückspflege mit einem Mähwerk,
- Fig. 2: eine perspektivische Ansicht des Mähwerks mit einem ersten und einem zweiten Zugmittelgetriebe,
- Fig. 3: das erste Zugmittelgetriebe in Explosionsdarstellung,
- Fig. 4: eine Ansicht des ersten Zugmittelgetriebes mit einem Spannungslösegriff in einer normalen Stellung,
- Fig. 5: das Zugmittelgetriebe aus Fig. 4, wobei sich der Spannungslösegriff in einer Stellung befindet, in der das Zugmittel nicht gespannt ist und
- Fig. 6: eine Explosionsdarstellung des zweiten Zugmittelgetriebes.

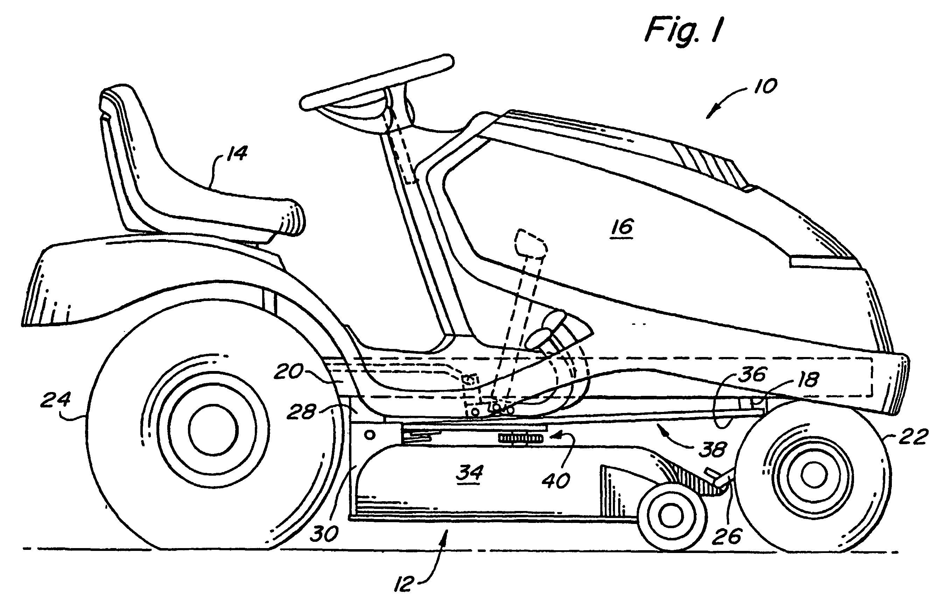

Es wird zuerst Fig. 1 betrachtet, in der ein Fahrzeug zur Rasen-, Garten- bzw. Grundstückspflege bzw. ein Gerät 10 gezeigt wird, das unter sich ein Mähwerk 12 trägt. Das Gerät 10 weist einen Bedienersitz 14, eine Haube 16 und einen Antrieb (nicht gezeigt) auf, welcher eine Kurbelwelle 18 aufweist, die sich durch ein Chassis 20 des Geräts 10 erstreckt und unterhalb dessen austritt. Das Gerät 10 weist weiter vordere, lenkbare Räder 22 wie auch rückwärtige, antreibbare Räder 24 auf.

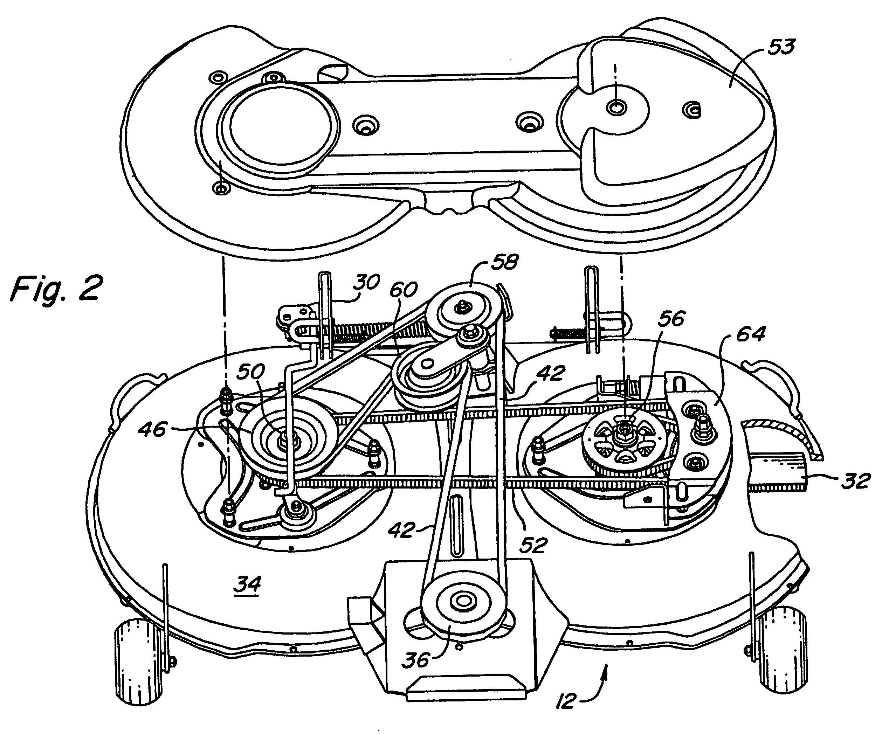

Das Mähwerk 12 ist in vertikaler Richtung verstellbar und ist an dem Gerät 10 über ein vorderes Tragelement 26 angeschlossen, das es voranzieht. An seinem rückwärtigen Bereich ist das Mähwerk 12 mit dem Gerät 10 über ein Gestänge 28 verbunden, das sich von dem Chassis 20 aus erstreckt und an dem Mähwerk 12 an einer Tragkonsole 30 auf jeder Seite des Mähwerks 12 angreift. Das Mähwerk 12 schließt Mähmesser 32 (in Figur 2 gezeigt) ein, welche innerhalb eines Gehäuses 34 rotieren, um Pflanzenwuchs zu schneiden, wenn sich das Gerät 10 über den Untergrund bewegt. Die Mähmesser 32 werden durch die Kurbelwelle 18 des Geräts 10 durch eine Antriebsriemenscheibe bzw. Antriebsscheibe 36, die auf der Kurbelwelle 18 angebracht ist, angetrieben, welche mit den Mähmessern 32 über erste und zweite Antriebseinheiten bzw. Zugmittelgetriebe 38, 40 verbunden ist. In der bevorzugten Ausführungsform ist eine elektrische Kupplung (nicht gezeigt) an der Kurbelwelle 18 vorgesehen, um ein bequemes in Eingriff bringen und außer Eingriff bringen der Antriebsscheibe 36 und dadurch eine Übertragung von Kraft an das Mähwerk 12 durch das erste Zugmittelgetriebe 38 zu erlauben.

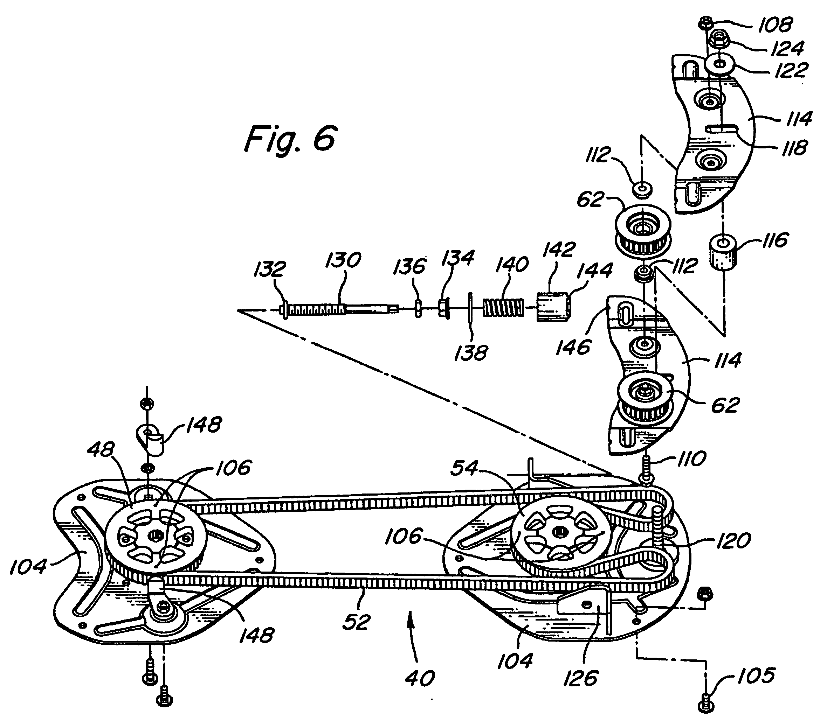

In Figur 2 wird eine perspektivische Ansicht des Mähwerks 12 gezeigt, die das erste und das zweite Zugmittelgetriebe 38, 40 deutlicher darstellt, welche Rotationsantriebskraft von der Antriebsscheibe 36 zu den Mähmessern 32 übertragen. Ein erster Antriebsriemen bzw. ein erstes Zugmittel 42 wird durch die Antriebsscheibe 36 angetrieben und greift an einer Doppelriemenscheibe (in Figur 6 gezeigt) an, die eine erste Antriebsscheibe 46 und eine zweite Antriebsscheibe 48 (in Figur 6 gezeigt) aufweist, die beabstandet auf einer vertikal ausgerichteten Messerspindel 50 (auf der rechten Seite des Mähwerks 12, betrachtet aus der Sicht einer Bedienungsperson dem Bedienersitz 14) angeordnet sind, welche als eine Übersetzungsanordnung bzw. eine Übersetzungswelle zwischen der ersten Antriebsscheibe 46 und der zweiten Antriebsscheibe 48 wirkt. Ein zweiter Antriebsriemen bzw. ein zweites Übertragungsmittel 52 ist unter einer Abdeckung 53 angeordnet und wird durch die Antriebsscheibe 48 der Übersetzungswelle angetrieben und greift an einer weiteren Antriebsscheibe 54 an, welche an einer weiteren vertikal ausgerichteten Messerspindel 56 angebracht ist. Die Mähmesser 32, die mit den unteren Bereichen der Messerspindeln 50, 56 verbunden sind, werden wirksam durch die ersten und zweiten Zugmittelgetriebe 38, 40 angetrieben, um in dem Gehäuse 34 des Mähwerks 12 zu rotieren, um so Vegetation und Gras zu schneiden. Wenn die Antriebsscheibe 36 durch den Antrieb angetrieben wird, wird die rotierende Ausgabe der Antriebsscheibe 36 zu den Mähmessern 32 über das erste Zugmittel 42, die Übersetzungsanordnung, das zweite Zugmittel 52, die Antriebsscheiben 48, 54 und die Messerspindeln 50, 56 übertragen. Ein Paar erster Antriebsfreilaufscheiben bzw. Spannscheiben 58, 60 ist an dem Mähwerk 12 vorgesehen und dient dazu, das erste Zugmittel 42 zu spannen, während ein Paar zweiter Antriebsfreilaufscheiben bzw. Spannscheiben 62 an einer zweiten Freilaufhalterung bzw. Halterung 64 vorgesehen ist und dazu dient, den zweiten Antriebsriemen 52 zu spannen.

In der gezeigten Ausführungsform rotieren die Mähmesser 32 gegensinnig und ihre Schneidkreise überlappen sich, so daß es notwendig ist, ihre relative Stellung während ihres Rotierens zu steuern. Daher ist es wünschenswert, das zweite Zugmittelgetriebe 40 als einen synchronisierten oder zeitgesteuerten Antrieb auszuführen. In dem gezeigten zweiten zugmittelgetriebe 40 sind die Antriebsscheiben 48, 54 sowie die Spannscheiben 62 als Zahnräder ausgeführt, welche an passenden Zähnen an dem zweiten Zugmittel 52 angreifen, obwohl ein Kettenantrieb alternativ verwendet werden könnte.

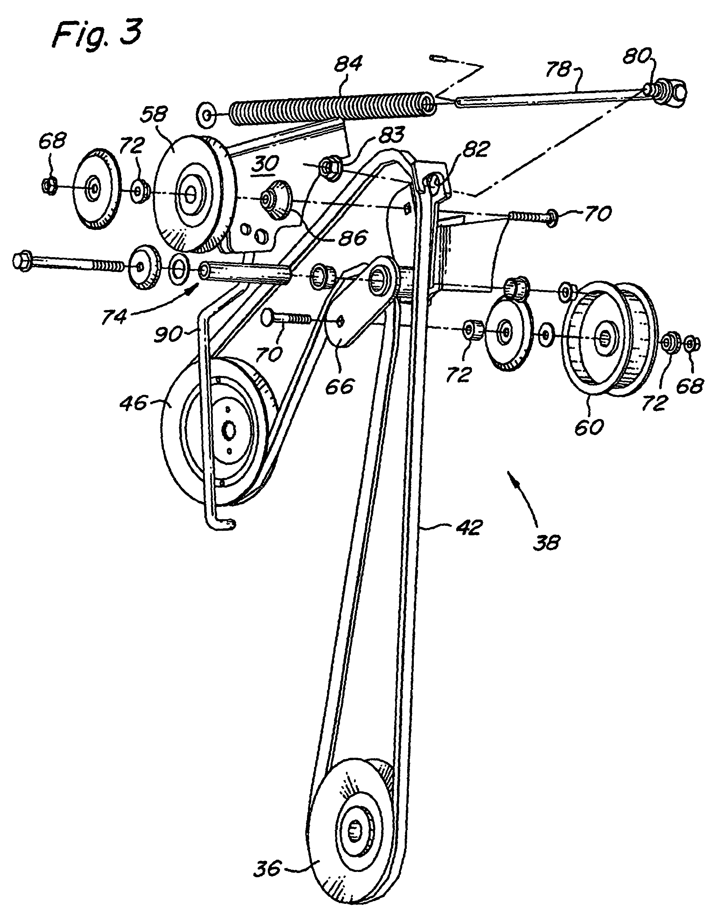

Es wird nun auf Fig. 3 Bezug genommen, in der das erste Zugmittelgetriebe 38 in Explosionsdarstellung gezeigt wird. Das erste Zugmittel 42 erhält eine rotierende Eingabe von der Antriebsscheibe 36. Während einer Rotation des Zugmittels 42 wird ein fester Punkt auf dem Zugmittel 42 von der Antriebsscheibe 36 um die stramm anliegende Spannscheibe 58 wandern, als nächstes auf die erste Antriebsscheibe 46 stoßen, um die das Zugmittel 42 geschlungen ist, um Kraft an diese zu übertragen. Von der ersten Antriebsscheibe 46 wird der feste Punkt auf dem Zugmittel 42 auf die rückwärtige Spannscheibe 60 treffen, um dann zu der Antriebsscheibe 36 zurückzugelangen.

Die stramm anliegende erste Spannscheibe 58 und die rückwärtige erste Spannscheibe 60 werden durch eine erste Freilaufhalterung bzw. eine Halterung 66 gehalten, welche eine feste Beziehung zwischen ihnen aufrecht erhält. Die Spannscheiben 58, 60 sind rotierbar mit der Halterung 66 über Muttern 68 und Schrauben 70 und einer Serie von Lagerbüchsen 72 verbunden, welche es den Spannscheiben 58, 60 erlauben, sich bezogen auf die Halterung 66 frei zu drehen. Eine Riemenleiteinrichtung 73 der Halterung 66 trägt dazu bei, das Zugmittel 42 richtig um die stramm anliegende Spannscheibe 58 während eines Betriebs geschlungen zu halten.

Die erste Halterung 66 wiederum wird durch eine Schwenkwelle 74, in Form einer Schrauben-, Hülsen- und Lageranordnung aufgenommen, die sich durch eine zentrale Aussparung in der Halterung 66 erstreckt, wodurch die Halterung 66 mit dem Gehäuse 34 (Figur 2) schwenkbar an einer Aufnahmekonsole 76 verbunden wird. Die Schwenkwelle 74 und die Schwenkachse, die durch diese erzeugt wird, sind vorzugsweise um einen Winkel aus der Vertikalen geneigt, um es der Halterung 66 zu erlauben, zu schwenken, wenn sich das Mähdeck 12 vertikal verschiebt und dient so dazu, die Spannscheiben 58, 60 in einer mittleren Stellung zwischen den Höhen der Antriebsscheibe 36 und der ersten Antriebsscheibe 46 zu positionieren. Das erste Zugmittel 42 nimmt daher verhältnismäßig geringe Winkel aus der Horizontalen mit Bezug auf die verschiedenen Scheiben ein, um die es geschlungen ist. Ein Verschleiß des Zugmittels 42, wenn es die verschiedenen Scheiben berührt, wird dadurch reduziert und das Zugmittel 42 wird dazu neigen, nicht so oft von den Scheiben herunterzuspringen. Die bevorzugte Ausführungsform wird so ein erstes Zugmittelgetriebe 38 zur Verfügung stellen, das Probleme reduziert oder eliminiert, die aus einer Falschausrichtung von Scheiben und großen Riemen- bzw. Zugmittelwinkeln herrühren.

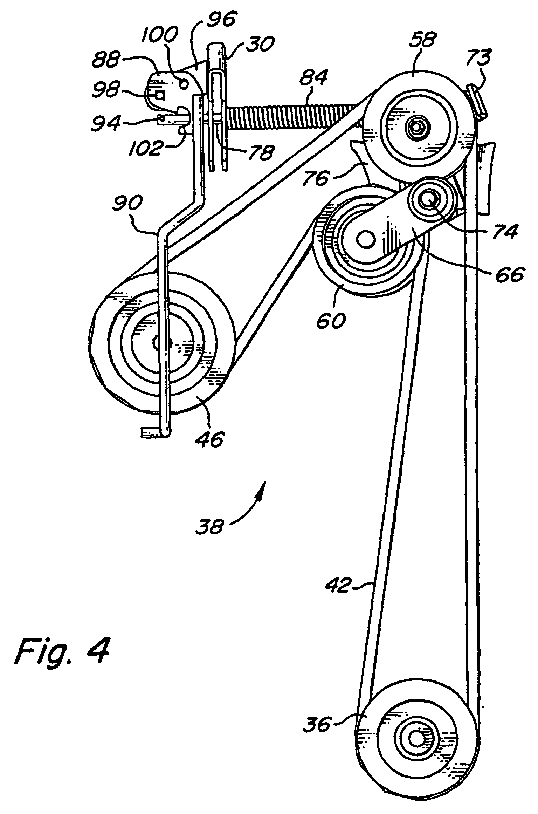

Die ersten Spannscheiben 58, 60 dienen dazu, das erste Zugmittel 42 zu spannen, indem der Weg des Zugmittels 42 effektiv verlängert wird, wenn die Halterung 66 im Uhrzeigersinn gedreht wird. Da beide, die stramm anliegende Spannscheibe 58 und die rückwärtige Spannscheibe 60 mit der Halterung 66 verbunden sind, wird die Menge an Riemen- bzw. Zugmittelspannung, die durch ein Drehen der Halterung 66 erzielt wird, stark erhöht (fast verdoppelt). Ein Spannbolzen 78 wird verwendet, um eine Kraft an der Halterung 66 anzulegen, die dazu neigt, die Halterung 66 im Uhrzeigersinn zu drehen, um so die Spannung des Zugmittels 42 zu erhöhen. Der Spannbolzen 78 ist mit der Halterung 66 mittels eines Endbereichs 80 mit einem nach oben gewandten Gewinde verbunden, welcher in einer entsprechenden Aussparung 82 in der Halterung 66 aufgenommen und mittels einer Mutter 83 gesichert wird. Der Spannstift 78 ist durch eine Schraubenfeder bzw. ein Spannmittel 84 und weiter durch eine Öffnung 86 in der Tragkonsole 30 geführt. Einmal durch die Tragkonsole 30 gelangt, wird der Spannbolzen 78 durch eine Endplatte 88 eines Spannungslösegriffs 90 (wie er in den Figuren 4 - 5 gesehen werden kann) geführt. Das Ende des Spannbolzens 78, das sich durch die Endplatte 88 (gegenüber dem Endbereich 80) erstreckt, ist mit einer Durchgangsbohrung 92 versehen, in welcher ein Sicherungstift 94 angeordnet ist, um den Spannstift 78 davon abzuhalten, rückwärts durch die Endplatte 88 und die Öffnung 86 zurückzugleiten. Die Tragkonsole 30 ist mit einer Griffanbaueinrichtung 96 versehen, die als eine flache, horizontale Erweiterung ausgeführt ist, um welche die U-förmige Endplatte 88 des Spannungslösegriffs 90 angeordnet und über einen Bolzen 98 zur schwenkbaren Bewegung angebracht ist. Um den Spannbolzen 78 bei angebrachtem Sicherungsstift 94 zu installieren, wird der Spannbolzen 78 so gedreht, daß der Sicherungsstift 94 zu den Schenkeln der U-förmigen Endplatte 88 parallel ist. Der Spannbolzen 78 wird in die Tragkonsole 30 und die Endplatte 88 eingesetzt und gedreht, so daß der Sicherungsstift 94 zu den Schenkeln der U-förmigen Endplatte 88 senkrecht steht und der Endbereich 80 des Spannbolzens 78 nach oben gedreht ist und durch die Aussparung 82 aufgenommen und an der Halterung 66 gesichert werden kann. Der Sicherungsstift 94 ist lang genug, um an den Schenkeln der Endplatte 88 anzuliegen, um den Spannbolzen 78 daran zu hindern, hindurchzugelangen, wenn der Sicherungsstift 94 zu den Schenkeln der U-förmigen Endplatte 88 senkrecht steht.

Es wird nun auf Figur 4 Bezug genommen. Während eines Betriebs ist die Schraubenfeder bzw. das Spannmittel 84 zwischen dem Endbereich 80 und der Tragkonsole 30 so zusammengedrückt, daß der Endbereich 80 dazu neigt, die Halterung 66 im Uhrzeigersinn zu drehen. Die Spannscheiben 58, 60 dienen jeweils dazu, den Weg des Zugmittels 42 zu verlängern, um Erschlaffungen auszugleichen und Spannung in dem Zugmittel 42 zu erzeugen. Der Spannungslösegriff 90 wird in seiner normalen Betriebsstellung gezeigt und kann in dieser Stellung gesichert werden, in dem ein Stift in fluchtende Öffnungen 100 in der Endplatte 88 und in der Halteeinrichtung 96 eingesetzt wird. In der normalen Betriebsstellung erstreckt sich der Sicherungsstift 94 über die Endplatte 88 hinaus und der Spannbolzen 78 kann axial vor- und zurückgleiten, wenn die Belastung auf das Zugmittel 42, die Halterung 66 dazu bringt, gegen die Feder 84 zu arbeiten.

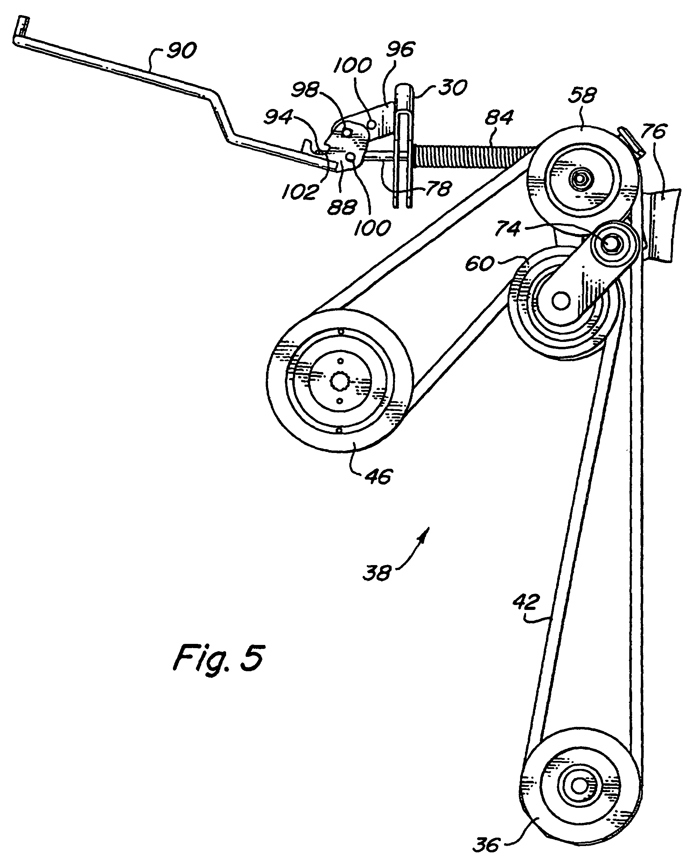

Wenn es wünschenswert ist, das Zugmittel 42 an der ersten Antriebseinheit 38 anzubringen oder es von ihr zu entfernen, wird es notwendig, die Spannung auf das Zugmittel 42 zu entlasten, so daß es von den Scheiben, um die es geschlungen ist, abgenommen werden kann. Figur 5 zeigt das erste Zugmittelgetriebe 38, wobei der Spannungslösegriff 90 in eine Installations-/Entfernstellung des Zugmittels 42 gebracht wurde, um eine Verringerung der Riemen- bzw. Zugmittelspannung zu bewirken. Wenn der Spannungslösegriff 90 aus seiner normalen Stellung (in Figur 4 gezeigt) im Uhrzeigersinn gedreht wird, bewegt sich die Endplatte 88 auf den Sicherungsstift 94 des Spannbolzens 78 zu, bis der Sicherungsstift 94 an der Endplatte 88 an einer aussparungsartigen inneren Oberfläche 102, die in die Schenkel der Endplatte 88 eingeformt ist, anliegt. Nachdem der Sicherungsstift 94 an der aussparungsartigen inneren Oberfläche 102 anliegt, wird eine weitere Rotation des Spannungslösegriffs 90 im Uhrzeigersinn den Spannbolzen 78 ziehen, wodurch die Halterung 66 gegen den Uhrzeigersinn dreht, so daß die Spannscheiben 58, 60, die auf dieser angeordnet sind, den Weg des ersten Zugmittels 42 wirksam verkürzen. Das Zugmittel 42 kann dann entfernt oder angebaut werden. Nachdem das Zugmittel 42 angebracht ist, kann der Spannungslösegriff 90 gegen den Uhrzeigersinn in seine normale Stellung gedreht werden, so daß die Kraft das Spannmittel 84 die Halterung 66 im Uhrzeigersinn dreht, wodurch das Zugmittel 42 wieder gespannt wird.

Es wird nun auf Figur 6 Bezug genommen, in der das zweite Zugmittelgetriebe 40 in einer Explosionsdarstellung gezeigt wird. Das zweite Zugmittelgetriebe 40 wird durch das Mähdeck 12 (Figur 2) getragen, indem es auf Stützplatten 104 angebracht wird, welche an dem Mähdeck 12 in Aushöhlungen in dem Gehäuse 34 befestigt sind. Eingeformte Merkmale in dem Gehäuse 34 weisen Versteifungsrippen und flache Oberflächen zum Anbringen der Stützplatten 104 an dem Gehäuse, beispielsweise mittels Schrauben 105 auf. Die eingeformten Einrichtungen des Gehäuses 34 und die Stützplatten 104 arbeiten zusammen, um Stärke und Steifigkeit zu dem Mähwerk 12 hinzuzufügen, was Belastungsverformungen minimiert. Die resultierende Struktur ist im wesentlichen stark, um permanente Verformungen des Gehäuses 34 und von Komponenten des zweiten Zugmittelgetriebes 40 zu verhindern, wenn Belastungen die Kapazität des Zugmittels 52 übersteigen.

In dem zweiten Zugmittelgetriebe 40 wird Rotationsantriebskraft von der ersten Antriebseinheit 38 durch die Antriebsscheibe 48 über die Übersetzungswelle aufgenommen. Das zweite Zugmittel 52 ist um die Antriebsscheibe 48 geschlungen, so daß seine Zähne mit denen der Antriebsscheibe 48 zusammenwirken. Das Zugmittel 52 ist in ähnlicher Weise um die Spannscheiben 62 und die Antriebsscheibe 64 geschlungen. Die Spannscheiben 62 werden als Teil einer Spanneinrichtung verwendet, um das Zugmittel 52 zu spannen und auch um es den Antriebsscheiben 48, 54 zu ermöglichen in entgegengesetzten Richtungen zu rotieren.

Die Antriebsscheiben 48, 54 sind mit den Stützplatten 104 über ihre jeweiligen Mähspindeln 50, 56 (Figur 2) verbunden und rotieren damit, so daß die Rotation der Antriebsscheiben 48, 54 mit der Rotation der Mähmesser 32 identisch ist, die an den unteren Enden der Mähspindeln 50, 56 angebracht sind. Die Antriebsscheiben 48, 54 und die erste Antriebsscheibe 46 oberhalb der Antriebsscheibe 48 sind mit einer Ausrichtungsanzeige wie Vertiefungen 106 versehen, so daß die Messerstellung bestimmt werden kann, ohne daß unter das Gehäuse 34 zu schauen ist. Die Vertiefungen 106 auf jeder Antriebsscheibe 48, 54 sind in Richtung der Messerstellung ausgerichtet, so daß ihre Stellung in Figur 6 einem Messerversatz von 90 Grad entspricht. Mit diesem Versatz können die Messer gegensinnig rotieren und sich mit ihren Schneidkreisen überlappen, ohne aufeinander einzuwirken.

Eine Spanneinrichtung des zweiten Zugmittelgetriebes 40 wird im folgenden beschrieben werden. Die Spanneinrichtung weist Spannscheiben 62 auf, welche drehbar an einer zweiten Halterung 64 über Muttern 108, Schrauben 110 und Lager 112 angebracht sind. Die Halterung 64 selbst weist obere und untere Platten 114 auf, welche identisch ausgebildet sind und durch Schrauben 110 wie auch eine Hülse 116, die zwischen ihnen angeordnet ist, zusammengehalten werden. Die Halterung 64 ist an der Stützplatte 104 mittels einer Schraube 120 angebracht, welche sich durch Schlitze 118 in der oberen und unteren Platte 114 und die Hülse 116 dazwischen erstrecken. Eine Unterlegscheibe 122 und eine Mutter 124 dienen dazu, die Halterung 64 an der Stützplatte 104 gegen eine relative Bewegung zu halten.

Wenn es an der Stützplatte 104 angebracht ist, wird ein Ende der Halterung 64 an einem Anschlag 126 an der Stützplatte 104 anliegen. An dem gegenüberliegenden Ende der Stützplatte 104 ist ein Spannhalter 128 vorgesehen, der eine Öffnung aufweist, in die das Ende eines Spannbolzens 103 eingesetzt ist. Ein Kragen 132 ist an das Ende des Spannbolzens 130 angrenzend vorgesehen, um den Spannbolzen 130 daran zu hindern, weiter durch die Öffnung zu gleiten. Eine Spannmutter 134 und eine Gegenmutter 136 greifen auf einem Gewindebereich des Spannbolzens 130 aneinander an und eine Unterlegscheibe 138, eine Feder bzw. ein Spannmittel 140 und eine Spannhülse 142 sind auf den Spannbolzen 130 aufgesetzt. An einem Ende ist die Spannhülse 142 mit Vorsprüngen 144 versehen, welche in entsprechenden Aussparungen 146 in den oberen und unteren Platten 114 der Halterung 64 aufgenommen werden, um dazu zu dienen eine gewünschte Beziehung zwischen dem Spannbolzen 130 und der Halterung 64 aufrechtzuerhalten.

Nachdem der Spannbolzen 130, die Muttern 134, 136, das Spannmittel 140 und die Spannhülse 142 richtig zwischen dem Spannhalter 128 und der Halterung 64 angeordnet sind, kann die Spannung des Zugmittels 152 erhöht werden, indem die Mutter 124 gelockert wird, um eine relative Bewegung zwischen der Platte 104 und der Halterung 64 zu erlauben und dann die Spannmutter 134 gegenüber der Spannhülse 142 anzuziehen. Die Spannhülse 142 wird dadurch gegen die Halterung 64 gedrückt und bewegt die Spannscheiben 62, um die Länge des Weges des Zugmittels 52 wirksam zu verlängern. Die Anlage des Endes der Halterung 64 an dem Anschlag 126 wird durch die Spannung des Zugmittels 52 aufrechterhalten, aber die Halterung 64 schwenkt und verschiebt sich etwas, wenn Kraft auf ihr anderes Ende durch die Spannhülse 142 aufgebracht wird. Eine Bewegung der Halterung 64 wird begrenzt, wenn der Spannbolzen 120 an dem Ende der als Schlitz ausgeführten Aussparung 118 in der Platte 114 anliegt.

Wenn eine gewünschte Riemen- bzw. Zugmittelspannung erreicht ist, können die Mutter 124 und die Gegenmutter 136 festgezogen werden, um die Spannung zu erhalten. Vorzugsweise wird eine Feder mit einer bekannten Federrate verwendet, um eine bestimmte Riemen- bzw. Zugmittelspannung zu erzielen, welche an oder in der Nähe des Punktes auftreten wird, wenn das Spannmittel 140 in der Spannhülse 142 zusammengedrückt ist, so daß der Spannbolzen 130, die Spannmutter 124, die Unterlegscheibe 138 und die Spannhülse 142 eine steife Struktur bilden. Die Anlage der Unterlegscheibe 138 gegen die Spannhülse 142 ist ein wirksamer sichtbarer Hinweis, so daß die gewünschte Spannung in dem Zugmittel 52, während eines Zusammenbaus und wenn das Zugmittel 52 ersetzt wird, verläßlich reproduziert werden kann.

Vorzugsweise weist eines der Enden des Spannbolzens 130 einen nicht runden Querschnitt wie den gezeigten hexagonalen Querschnitt auf, an welchem mittels eines Motorwerkzeugs während eines Zusammenbaus angegriffen werden kann, da die Nähe der Einstellmutter zu der Platte 104 die Verwendung eines Standardmotorwerkzeugs verhindern kann.

Die Position der Spannscheiben 62 in dem zweiten gezeigten Zugmittelgetriebe 40 stellt einen hohen Grad an Riemen- bzw. Zugmittelumschlingung (größer als 180 Grad) um die Antriebsscheibe 54 zur Verfügung, wodurch weiter dazu beigetragen wird, daß Risiko eines Weiterrutschens des Zugmittels 52 und einer Beeinflussung der Steuerung zu reduzieren. In der bevorzugten Ausführungsform ist die Antriebsscheibe 48 mit einer einstellbaren Riemenleiteinrichtung 148 ausgestattet, die mit der Stützplatte 104 angrenzend an die Antriebsscheibe 48 verschraubt ist, um der Möglichkeit eines Rutschens des Zugmittels 52 weiter entgegenzuwirken. Es ist ein zweites Zugmittelgetriebe 40 vorgesehen, in dem die Spannscheiben 62, welche das Zugmittel 52 spannen, fest angebracht und befestigt sind, um eine Bewegung bei normaler und hoher Spitzenbelastung des Zugmittels 52 auf jeder der rechten oder der linken Antriebsscheibe 48, 54 zu verhindern, indem ein fester Pfad steifer Element zur Spannung des Zugmittels 52 gebildet wird. Das Zugmittel 52 wird direkt durch Federkräfte gespannt, die durch die Spannhülse 142 erzeugt und gesteuert werden; das Spannmittel 140 ist zu einer vorhersagbaren und wiederholbaren Länge zusammengedrückt, die die erforderliche Zugmittelspannung erzeugt, welche durch ein Annähern des Spannbolzens 120 und der Mutter 124 nicht wesentlich verändert wird.

Obwohl die Erfindung mit Bezug auf die dargestellte Ausführungsform beschrieben wird, sollte es für einen Fachmann deutlich sein, daß die Erfindung in der beschriebenen Form wie auch verändert zur Verwendung in anderen Anwendungsfällen geeignet ist. Die vorliegende Erfindung soll nicht durch die oben beschriebene Ausführungsform sondern nur durch die folgenden Ansprüche begrenzt werden.

## Patentansprüche

1. Mähwerk (12) mit einem Zugmittelgetriebe (38) mit wenigstens zwei Antriebsscheiben (36, 46), die von einem Zugmittel (42) umschlungen werden und einer Spanneinrichtung, die über wenigstens zwei drehbar auf einer gemeinsamen durch ein Spannmittel (84) belasteten, schwenkbar an dem Mähwerk (12) vorgesehenen Halterung (66) angebrachte Spannrollen (58, 60) auf das Zugmittel (42) einwirken kann, wobei die Spannrollen (58, 60) an entgegengesetzten Seiten des Zugmittels (42) angreifen, **dadurch gekennzeichnet, dass** das Zugmittel (42) von der ersten, auf einer ersten Seite des Zugmittels (42) angreifenden Spannscheibe (58) kommend, wenigstens eine der Antriebsscheiben (36, 46) umschlingt, um im Anschluss auf die zweite, an einer der ersten Seite des Zugmittels (42) gegenüberliegenden Seite des Zugmittels (42) angreifende Spannscheibe (60) zu treffen.

2. Mähwerk nach Anspruch 1, **dadurch gekennzeichnet, daß** die Halterung (66) um eine bezogen auf die Achse wenigstens einer der Antriebsscheiben (36, 46) schräge Achse schwenkbar ist.

3. Mähwerk nach einem oder mehreren der vorherigen Ansprüche, **dadurch gekennzeichnet, daß** das Spannmittel (84) wenigstens eine Feder, vorzugsweise eine Schraubenfeder, umfaßt bzw. als eine solche ausgebildet ist.

4. Mähwerk nach einem oder mehreren der vorherigen Ansprüche, **dadurch gekennzeichnet, daß** an der Halterung (66) ein Spannungslösegriff (90) angreift, mittels dessen der Wirkung des Spannmittels (84) entgegengewirkt werden kann.

5. Mähwerk nach Anspruch 4, **dadurch gekennzeichnet, daß** die Spanneinrichtung einen Spannbolzen (78) aufweist, der sich vorzugsweise zumindest im wesentlichen parallel zu einer Achse des Spannmittels (84) erstreckt und der mit dem Spannungslösegriff (90) derart zusammenwirken kann, daß er die Halterung (66) gegen die Wirkung des Spannmittels (84) bewegen kann.

6. Fahrzeug (10) bzw. Gerät zur Rasen-, Garten- bzw. Grundstückspflege mit einem Mähwerk (12) nach einem oder mehreren der vorherigen Ansprüche.

7. Fahrzeug bzw. Gerät nach Anspruch 6, **dadurch gekennzeichnet, daß** das Mähwerk (12) unterhalb des Fahrzeugs (10) bzw. Geräts angeordnet ist.

## Claims

1. A mower mechanism (12) with a tension means drive (38) with at least two drive wheels (36, 46) which are wrapped round by a means acting in tension (42) and with a tensioning device which can act on the means acting in tension (42) through at least two tensioning rollers (58, 60) fitted rotatably on a common carrier (66) biased by a tensioning means (84) and fitted pivotally on the mower mechanism (12), wherein the tensioning rollers (58, 60) engage on opposite sides of the means acting in tension (42), **characterized in that** the means acting in tension (42) coming from the first tensioning wheel (58) engaging on a first side of the means acting in tension (42) wraps round at least one of the drive wheels (36, 46), in order then to encounter the second tensioning wheel (60) engaging on a side of the means acting in tension (42) opposite the first side of the means acting in tension (42).

2. A mower mechanism according to claim 1, **characterized in that** the carrier (66) can pivot about an axis inclined relative to the axis of at least one of the drive wheels (36, 46).

3. A mower mechanism according to one or more of the preceding claims, **characterized in that** the tensioning means (84) comprises or is in the form of a spring, preferably a helical spring.

4. A mower mechanism according to one or more of the preceding claims, **characterized in that** a tension relieving handle (90) engages the carrier (66) and the action of the tensioning means (84) can be counteracted thereby.

5. A mower mechanism according to claim 4, **characterized in that** the tensioning device comprises a tension bolt (78) which preferably extends at least substantially parallel to an axis of the tensioning means (84) and which can so cooperate with the tension relieving handle (90) that it can move the carrier (66) against the action of the tensioning means (84).

6. A vehicle (10) or implement for lawn, garden or plot care, with a mower mechanism (12) according to one or more of the preceding claims.

7. A vehicle or implement according to claim 6, **characterized in that** the mower mechanism (12) is arranged below the vehicle (10) or the implement.

## Revendications

1. Faucheuse (12) comportant une transmission par élément sous tension (38), équipée d'au moins deux poulies motrices (36, 46), autour desquelles s'enroule un élément sous tension (42), et d'un système de mise sous tension, qui peut agir sur l'élément sous tension (42), par l'intermédiaire d'au moins deux galets tendeurs (58, 60) montés sur un support commun (66), prévu pivotant sur la faucheuse (12), et soumis à un organe de mise sous tension (84), les galets tendeurs (58, 60) attaquant l'élément sous tension (42) sur des côtés opposés, **caractérisée en ce que** l'élément sous tension (42) s'enroule, depuis la première des poulies tendeuses (58) qui se présente, en attaquant sur un premier côté l'élément sous tension (42), autour d'au moins une des poulies motrices (36, 46), pour rencontrer, à la suite, la seconde poulie tendeuse (60), en attaquant un côté de l'élément sous tension (42) situé à l'opposé du premier côté.

2. Faucheuse selon la revendication 1, **caractérisée en ce que** le support (66) peut pivoter autour d'un axe situé obliquement par rapport à l'axe d'au moins l'une des poulies motrices (36, 46).

3. Faucheuse selon l'une ou plusieurs des revendications précédentes, **caractérisée en ce que** l'organe de mise sous tension (84) comporte au moins un ressort, de préférence un ressort hélicoïdal, ou est constitué comme tel.

4. Faucheuse selon l'une ou plusieurs des revendications précédentes, **caractérisée en ce que** le support (66) attaque une tige de détente (90), au moyen de laquelle l'action de l'organe de mise sous tension (84) peut être contrecarrée.

5. Faucheuse selon la revendication 4, **caractérisée en ce que** le système de mise sous tension présente un boulon de tension (78), qui s'étend, de préférence, au moins pratiquement parallèlement à un axe de l'organe de mise sous tension (84), et qui peut coopérer avec la tige de détente (90) de telle sorte qu'il peut déplacer le support (66) à l'encontre de l'action de l'organe de mise sous tension (84).

6. Véhicule (10), ou appareil pour l'entretien des pelouses, des jardins ou des terrains, au moyen d'une faucheuse (12) selon l'une ou plusieurs des revendications précédentes.

7. Véhicule, ou appareil selon la revendication 6, **caractérisé en ce que** la faucheuse (12) est agencée sous le véhicule ou l'appareil.
